# EUROPEAN PATENT SPECIFICATION

(11) **EP 2 344 349 B1**
(45) Date of publication and mention of the grant of the patent: **05.09.2012**
(21) Application number: 09779228.7
(22) Date of filing: 30.03.2009
(51) Int. Cl.: C08K 5/548, B60C 1/00, C08K 3/36, C08K 5/54, C08L 9/06, C08L 21/00

(54) **WINTER TYRE TREAD MIX**
WINTERREIFENPROFILMISCHUNG
MÉLANGE BANDE DE ROULEMENT POUR PNEUMATIQUE HIVER

(30) Priority: 22.10.2008 IT TO20080774
(43) Date of publication of application: 20.07.2011
(73) Proprietor: Bridgestone Corporation, Tokyo 104-8340 (JP)
(72) Inventor: DI RONZA, Raffaele, I-00146 Roma (IT)
(74) Representative: Bosman, Cesare
(86) International application number: PCT/EP2009/053764
(87) International publication number: WO 2010/046139

(56) References cited:
- EP-A- 1 818 188
- EP-A- 1 967 387
- US-A- 3 768 537
- US-A1- 2004 152 811
- US-A1- 2007 221 303

## Description

### TECHNICAL FIELD

The present invention relates to a winter tyre tread mix.

### BACKGROUND ART

Winter tyres are designed for safety in terms of road-holding performance in winter conditions, i.e. on ice and snow.

In certain mixes, carbon black has long been replaced with silica, which is particularly advantageous in terms of roll resistance and wet-pavement grip.

Silica is used in combination with silane bonding agents, which bond with silica silanol groups to prevent the formation of hydrogen bonds between silica particles, while at the same time fixing the silica chemically to the polymer base.

As is known, one problem facing winter tyre manufacturers is the delicate balance between wet-pavement grip and acceptable performance on snow. That is, one solution for improving wet-pavement grip consists in increasing the silica content of the tread mix. While greatly increasing wet-pavement grip, however, a high silica content in the mix also impairs tyre performance on ice and snow, by making the tread mix too rigid.

### DISCLOSURE OF INVENTION

It is an object of the present invention to provide a tread mix designed to achieve excellent grip in both wet-pavement and winter conditions.

According to the present invention, there is provided a tread mix comprising a cross-linkable unsaturated-chain polymer base; 50 to 90 phr of silica; and 4 to 10 phr of a silane bonding agent; said mix being characterized in that said silica has a surface area of 80 to 130 m²/g, and said silane bonding agent is of formula I

SH (CH₂)₃SiR¹R²₂ (I)

where :
R¹ is -OCH₂CH₃, and
R² is -O(CH₂CH₂O)₅(CH₂)₁₂CH₃

### BEST MODE FOR CARRYING OUT THE INVENTION

In a preferred embodiment, said mix comprises 10 to 40 phr of BR with a vinyl content of 60 to 80%.

The following are purely non-limiting examples, for a clearer understanding of the invention.

Five control mixes (A, B, C, D, E) and two mixes in accordance with the teachings of the present invention (F, G) were prepared, and each was tested to determine wet-pavement grip and performance on ice/snow.

The mixes described in the examples were prepared using the following procedure:
- preparation of the mixes -

### (1st mixing step)

Prior to mixing, a 230-270-litre, tangential-rotor mixer was loaded with the cross-linkable polymer base, silica, silane bonding agent and oil, to a fill factor of 66-72%.

The mixer was operated at a speed of 40-60 rpm, and the mix was unloaded on reaching a temperature of 140-160°C.

### (2nd mixing step)

The mix from the first step was again worked in a mixer operated at a speed of 40-60 rpm, and was unloaded on reaching a temperature of 130-150°C.

### (3d mixing step)

The curing system was added to the mix from the second step, to a fill factor of 63-67%.

The mixer was operated at a speed of 20-40 rpm, and the mix was unloaded on reaching a temperature of 100-110°C.

Table 1 shows the compositions of the five control mixes.

**Table 1**

| | A | B | C | D | E |
|---|---|---|---|---|---|
| S1723 | 110 | 110 | 82.5 | 82.5 | 82.5 |
| Nd-BR | 20 | -- | -- | -- | -- |
| High vinyl BR | -- | 20 | 40 | 40 | 40 |
| Silica (VN3) | 66 | 66 | 66 | -- | -- |
| Silica (Z1115) | -- | -- | -- | 66 | 76 |
| SI75 | 6.6 | 6.6 | 6.6 | 6.6 | 7.6 |
| Oil | -- | -- | 7.5 | 7.5 | 7.5 |
| Sulphur | 1.8 | 1.8 | 1.8 | 1.8 | 1.3 |

Table 2 shows the compositions of the two mixes according to the invention.

**Table 2**

| | F | G |
|---|---|---|
| S1723 | 110 | 82.5 |
| Nd-BR | 20 | -- |
| High vinyl BR | -- | 40 |
| Silica (Z1115) | 83 | 76 |
| Silane bonding agent (I) | 9.6 | 8.8 |
| Oil | 7.5 | 7.5 |
| Sulphur | 1.2 | 1.2 |

As can be seen by comparing the two Tables, the mixes according to the present invention differ from the control mixes by containing low-surface-area (i.e. 110 m²/g) silica marketed under the trade name Z1115, and the particular silane bonding agent of formula I. The silica used in control mixes A-C has a surface area of 170 m²/g.

Mix G represents a further improvement by also containing a high (i.e. 70%) vinyl-content BR.

As stated, mixes A-G were tested to determine grip in wet-pavement and winter conditions.

Table 3 shows the test results.

**Table 3**

| | A | B | C | D | E | F | G |
|---|---|---|---|---|---|---|---|
| TanD at 0°C | 100 | 106 | 107 | 107 | 112 | 110 | 113 |
| E' at -20°C | 100 | 95 | 93 | 97 | 94 | 100 | 99 |
| E' at 30°C | 100 | 99 | 99 | 97 | 101 | 100 | 99 |
| Wear index | 100 | 60 | 75 | 85 | 95 | 100 | 98 |

As experts know, the TanD at 0°C, E' at -20°C and E' at 30°C values indicate wet-pavement grip, winter performance, and dry-pavement performance indexes respectively.

The elastic component of the dynamic modulus (E') and TanD were measured in accordance with ASTM Standard D5992.

The wear index was determined by DIN abrader testing in accordance with ASTM Standard 5963.

As shown by the results in Table 3, mixes F and G according to the present invention are the only ones that provide for a high degree of both wet-pavement grip and winter performance. More specifically, if high-vinyl-content BR is also used, in addition to combining low-surface-area silica and the silane bonding agent of formula (I), even better results are achieved in terms of wet-pavement grip, while still maintaining excellent winter performance.

Finally, it is important to note how the mixes according to the present invention also ensure excellent dry-pavement performance and wear index values.

## Claims

1. A tread mix comprising a cross-linkable unsaturated-chain polymer base; 50 to 90 phr of silica; and 4 to 10 phr of a silane bonding agent; said mix being **characterized in that** said silica has a surface area of 80 to 130 m²/g, and said silane bonding agent is of formula I
SH(CH₂)₃SiR¹R²₂ (I)
were :
R¹ is -OCH₂CH₃, and
R² is -O(CH₂CH₂O)₅(CH₂)₁₂CH₃

2. A tread mix as claimed in Claim 1, **characterized by** comprising 10 to 40 phr of BR with a vinyl content of over 60%.

3. A tread mix as claimed in Claim 2, **characterized by** comprising a cross-linkable unsaturated-chain polymer base; 10 to 30 phr of BR with a vinyl percentage of over 70%; 70 to 80 phr of silica with a surface area of 100 to 120 m²/g; and 8.5 to 9.5 phr of silane bonding agent of formula I.

4. A tread made from a mix as claimed in one of the foregoing Claims.

5. A tyre comprising a tread as claimed in Claim 4.

## Patentansprüche

1. Eine Reifenprofilmischung, umfassend eine quervernetzbare ungesättigte Kettenpolymer-Basis; 50 - 90 phr Silizium; und 4 bis 10 phr eines Silan-Bindungszusatzes, wobei die Mischung **dadurch gekennzeichnet ist, dass** das Silizium einen Oberflächenbereich von 80 bis 130 m²/g aufweist, und der Silan-Bindungszusatz folgender Formel I folgt:
SH (CH₂)₃SiR¹R²₂ (I)
wobei:
R¹ ist -OCH₂CH₃, und
R² ist -O(CH₂CH₂O)₅(CH₂)₁₂CH₃

2. Profilmischung nach Anspruch 1, **dadurch gekennzeichnet, dass** sie 10 bis 40 phr BR mit einem Vinyl-Gehalt von über 60% umfasst.

3. Profilmischung nach Anspruch 2, **dadurch gekennzeichnet, dass** sie eine quervernetzbare ungesättigte Kettenpolymer-Basis umfasst; 10 bis 30 phr BR mit einem Vinyl-Gehalt von über 70%; 70 bis 80 phr Silizium mit einem Oberflächenbereich von 100 bis 120 m²/g; und 8,5 bis 9,5 phr eines Silan-Bindungszusatzes der Formel I.

4. Profil, welches aus einer Mischung nach einem der vorherigen Ansprüche hergestellt ist.

5. Reifen, welcher ein Profil nach Anspruch 4 umfasst.

## Revendications

1. Mélange pour bande de roulement, comprenant un polymère de base à chaîne insaturée réticulable ; 50 à 90 phr de silice ; et 4 à 10 phr d'un agent de liaison du type silane ; ledit mélange étant **caractérisé en ce que** ladite silice a une surface spécifique de 80 à 130 m²/g et ledit agent de liaison du type silane répond à la formule I
SH(CH₂)₃SiR¹R²₂ (I)
dans laquelle :
R¹ représente un groupe -OCH₂CH₃, et
R² représente un groupe -O(CH₂CH₂O)₅(CH₂)₁₂CH₃.

2. Mélange pour bande de roulement suivant la revendication 1, **caractérisé en ce qu'**il comprend 10 à 40 phr de BR ayant une teneur en groupes vinyle supérieure à 60 %.

3. Mélange pour bande de roulement suivant la revendication 2, **caractérisé en ce qu'**il comprend un polymère de base à chaîne insaturée réticulable ; 10 à 30 phr de BR ayant un pourcentage en groupes vinyle supérieur à 70 % ; 70 à 80 phr de silice ayant une surface spécifique de 100 à 120 m²/g ; et 8,5 à 9,5 phr d'un agent de liaison du type silane de formule I.

4. Bande de roulement produite à partir d'un mélange suivant l'une quelconque des revendications précédentes.

5. Bandage pneumatique comprenant une bande de roulement suivant la revendication 4.
